# FASCICULE DE BREVET EUROPEEN

(11) **EP 1 689 310 B1**
(45) Date de publication et mention de la délivrance du brevet: **11.03.2015**
(21) Numéro de dépôt: 04787419.3
(22) Date de dépôt: 23.09.2004
(51) Int. Cl.: A61C 1/12, A61C 1/10, A61C 1/08, A61C 1/14

(54) **PIECE A MAIN DENTAIRE A CORPS FORME D'UNE SEULE PIECE ET COMPORTANT UN ORGANE DE LIAISON ELECTRIQUE ET ELASTIQUE ENTRE LES ORGANES DE TRANSMISSION MECANIQUE ET LA TETE DE L'INSTRUMENT**
DENTALHANDSTÜCK MIT EINEM KÖRPER AUS EINEM STÜCK UND MIT EINEM ELEKTRONISCHEN UND ELASTISCHEN ELEMENT ZUR VERBINDUNG ZWISCHEN DEN MECHANISCHEN ÜBERTRAGUNGSELEMENTEN UND DEM KOPF DES INSTRUMENTS
DENTAL HANDPIECE WITH A BODY FORMED FROM A SINGLE PIECE AND COMPRISING AN ELECTRONIC AND ELASTIC ELEMENT FOR CONNECTION BETWEEN THE MECHANICAL TRANSMISSION ELEMENTS AND THE HEAD OF THE INSTRUMENT

(30) Priorité: 25.11.2003 FR 0313899; 25.03.2004 FR 0403047
(43) Date de publication de la demande: 16.08.2006
(73) Titulaire: Micro-Mega International Manufactures, 25000 Besancon (FR)
(72) Inventeur: PERNOT, Jacques, F-25870 Vieilley (FR); BOINOT, Jean-Claude, F-25000 Besancon (FR)
(74) Mandataire: Poupon, Michel
(86) Numéro de dépôt international: PCT/FR2004/002392
(87) Numéro de publication internationale: WO 2005/063140

(56) Documents cités:
- EP-A- 0 322 896
- EP-A- 0 937 440
- FR-A- 799 430
- US-A- 5 575 647
- US-A- 5 897 315
- US-A- 5 902 105
- US-A1- 2002 168 610

## Description

L'invention concerne un nouveau type de pièce à main dentaire.

Les pièces à mains dentaires généralement connues sont de deux types les pièces à main droites et les pièces à main à contre-angle.

Dans le cas des pièces à main à contre-angle le corps est constitué d'un manche présentant un coude et d'une tête.

Cette structure conduit à un mode de réalisation qui impose au moins deux pièces pour le corps et très souvent trois pour permettre l'assemblage des organes internes, et qui impose également plusieurs paliers, au moins trois.

Il est évident que ce type de conception ne permet pas de réduire les coûts de façon importante.

Du document US5902105 est connu un appareil de traitement dentaire comportant une fonction de mesure de la longueur du canal radiculaire d'une dent. L'appareil comporte une pièce à main en plusieurs parties pourvue d'un ensemble porte-outil pour la fixation et l'entraînement en rotation d'un instrument dentaire autour d'un axe d'entraînement et une chaîne d'organes de transmission mécanique du mouvement de rotation, lesdits organes mécaniques servant aussi à la conduction du courant électrique.

Le document EP937440 divulgue une pièce à main dentaire dont le corps servant de manche et de tête est formé d'une seule pièce en polymère moulé par injection sous pression.

Un premier but de l'invention est de proposer un nouveau concept de structure de pièces à main pouvant remplacer le concept actuel des pièces à main, et permettant la réalisation du corps en une seule pièce que ce soit pour des pièces à main à entraînement mécanique ou pour des pièces à main à entraînement par turbine à air.

Ce but est atteint par l'invention qui consiste en une pièce à main selon la revendication 1.

Selon une autre variante la tête contient une turbine et le corps de la pièce à main comporte des canaux de fluide nécessaires au fonctionnement

Préférentiellement le logement intérieur de la tête est apte à recevoir un ensemble porte-outil composé des organes de transmission mécaniques de la tête, et à recevoir un moyen de serrage desserrage de l'outil ou instrument, ledit logement débouchant sur la tête par une ouverture obturable par un bouchon ou un chapeau, ou par un bouton-poussoir.

Préférentiellement la pièce à main comporte un dispositif de fixation d'un instrument dentaire à un ensemble porte-outil pour la fixation et l'entraînement en rotation d'un outil ou instrument dentaire autour d'un axe d'entraînement, ledit ensemble porte-outil étant intégré dans une tête d'une pièce à main dentaire, et couplé à un ensemble de transmission de mouvement, intégré dans un manche de ladite pièce à main, et composé principalement d'un moyen de serrage-desserrage déformable et élastique en forme de ceinture, dont au moins une partie présente une section apte à s'engager dans une gorge ou rainure annulaire qui est prévue en partie supérieure de l'instrument et apte à maintenir ledit instrument par serrage de l'instrument, ledit moyen de serrage desserrage comportant également des moyens pour exercer des forces de desserrage venant annuler les forces de serrage afin de libérer l'instrument.

Préférentiellement ledit dispositif de fixation est amovible par rapport au porte-outil.

Selon une variante, la ceinture en matériau déformable élastique présente une forme sensiblement de parallélogramme avec une zone centrale prévue pour enserrer la tête de l'instrument au niveau d'une rainure.

Selon une autre variante la ceinture élastique déformable présente la forme d'un anneau fendu ou d'une griffe annulaire fendue comportant un épaulement annulaire apte à s'engager dans une gorge annulaire de l'instrument et une partie conique pour coopérer avec une partie complémentaire conique d'un bouton poussoir.

Selon la variante d'exécution et/ou la vitesse de travail de l'outil, le dispositif de fixation peut comporter un bouton poussoir, solidaire ou non du porte-outil, et pouvant être maintenu par exemple par clipsage dans une ouverture de la tête.

On comprendra mieux l'invention à l'aide de la description ci-après faite en référence aux figures annexées suivantes :
- figure 1 : vue générale en trois dimensions d'une pièce à main selon l'invention,
- figure 2 : vue en coupe longitudinale de la pièce à main de figure 1,
- figure 3 : vue en coupe longitudinale partielle d'un mode de réalisation non limitatif de l'invention,
- figure 4: représentation en volume et partielle d'un autre mode de réalisation non limitatif comportant un moyen de serrage desserrage en forme de ceinture élastique en losange desserrable manuellement,
- figure 5 : vue en coupe axiale de la vue de la figure 4,
- figure 6 : vue en coupe transversale et partielle de la tête de la figure 4, réalisée au niveau de la ceinture élastique,
- figure 7 : représentation en volume et coupe partielle de la tête de la figure 4,
- figure 8 : vue en coupe axiale d'un autre mode de réalisation non limitatif comportant un moyen de serrage desserrage en forme de ceinture élastique desserrable par l'action d'un bouton poussoir,
- figure 9 : représentation en volume et en coupe partielle du mode de réalisation de la figure 8,
- figure 10 : représentation en volume de la ceinture élastique des figures 8 et 9,
- figure 11 : vue en coupe axiale d'un autre mode de réalisation non -limitatif comportant un moyen de serrage desserrage en forme d'anneau fendu,
- figures 12 et 13 : représentation en volume du bouton poussoir de la figure 11,
- figures 14 et 15: représentation en volume d'un moyen de serrage desserrage en forme d'anneau-griffe fendu de la figure 11,
- figure 16 : représentation en volume d'un bouton poussoir de la figure 3,

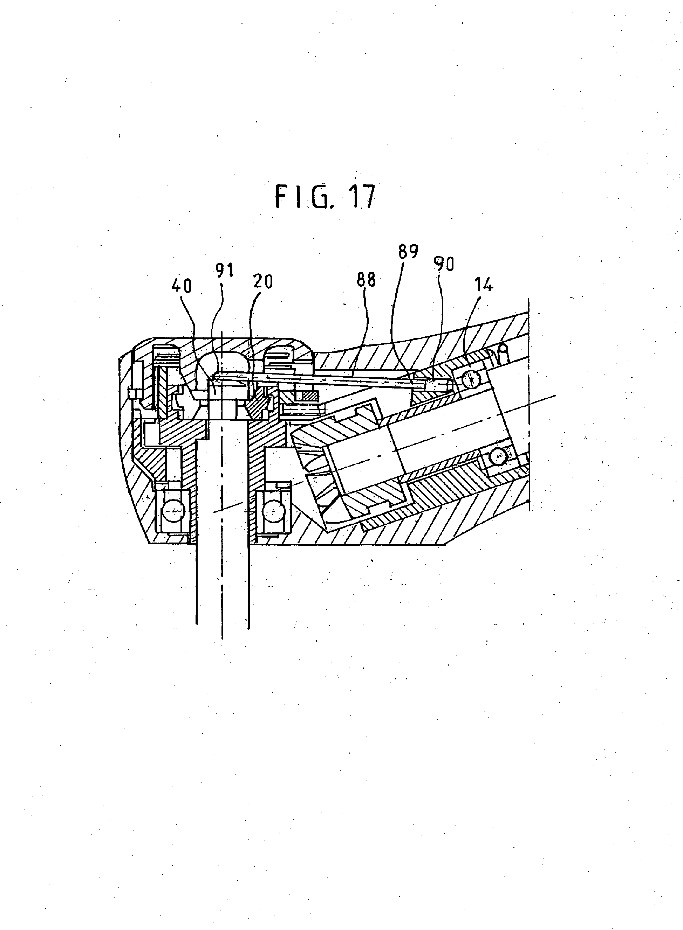

- figure 17 : variante de réalisation de la figure 3 qui ne fait pas partie de l'invention comportant un organe de liaison élastique et conducteur.

### Concept général du corps de la pièce à main.

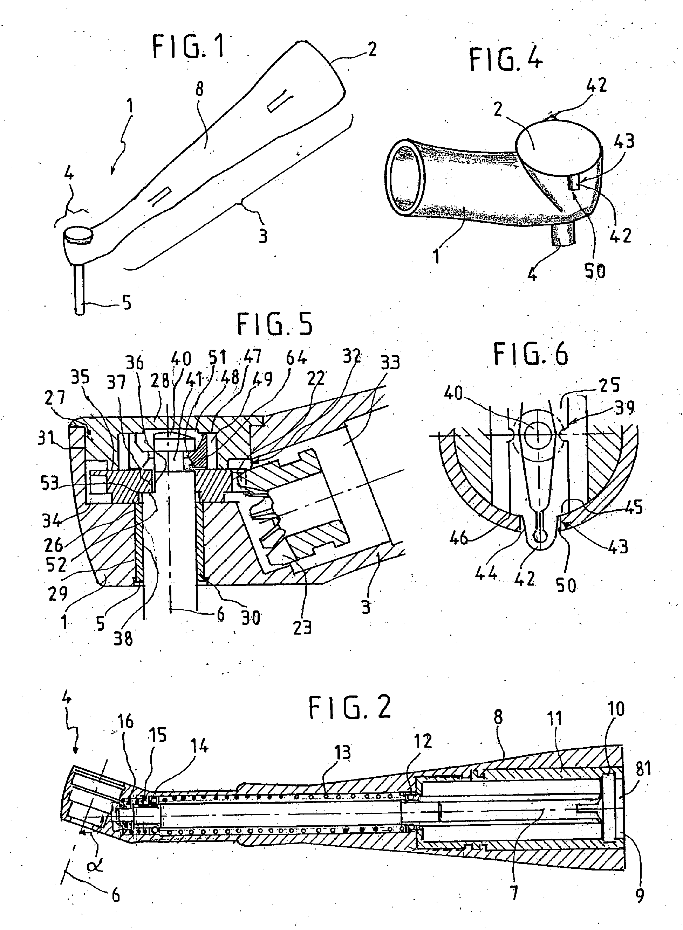

On se reporte d'abord aux exemples non limitatifs des figures 1 à 3.

Une pièce à main (1) selon l'invention est constituée d'un corps (2) en une seule pièce comprenant une partie servant de manche (3) d'axe rectiligne et d'une partie constituant une tête (4), pour la fixation et l'entraînement d'un instrument (5) selon un axe d'entraînement (6) pouvant être aligné avec l'axe du manche (7) ou pouvant former un angle prédéterminé avec celui-ci, compris entre 90 et 180° et préférentiellement compris entre 100° et 130°, comme sur l'exemple non limitatif des figures.

Le corps est formé d'une enveloppe (8) ou carcasse extérieure, monobloc ou pas, qui peut être électriquement isolante et pouvant par exemple être réalisée en matériau polymère, thermoplastique ou thermodurcissable, (préférentiellement du polyéther-éther cétone en abrégé PEEK dans la suite du texte) incorporant les composants mécaniques du manche et de la tête ainsi que des moyens de liaison électrique, assurant la transmission du mouvement et de l'énergie électrique depuis une connexion (9) prévue en extrémité du manche pour coopérer avec un moteur extérieur, non représenté, jusqu'à l'instrument (5) fixé dans la tête (4).

Le contre-angle (1) selon l'invention représënté sur les figures 1 à 3 présente deux axes (6) et (7) permettant de limiter les aléas de frottements propres à chaque palier et ce, afin de garantir un rendement le plus stable possible, c'est pourquoi dans ce cas, des roulements à billes sont également intégrés dans l'enveloppe (8). Une telle disposition du contre-angle se prête particulièrement bien aux traitements canalaires (endodontie) avec localisateur d'apex.

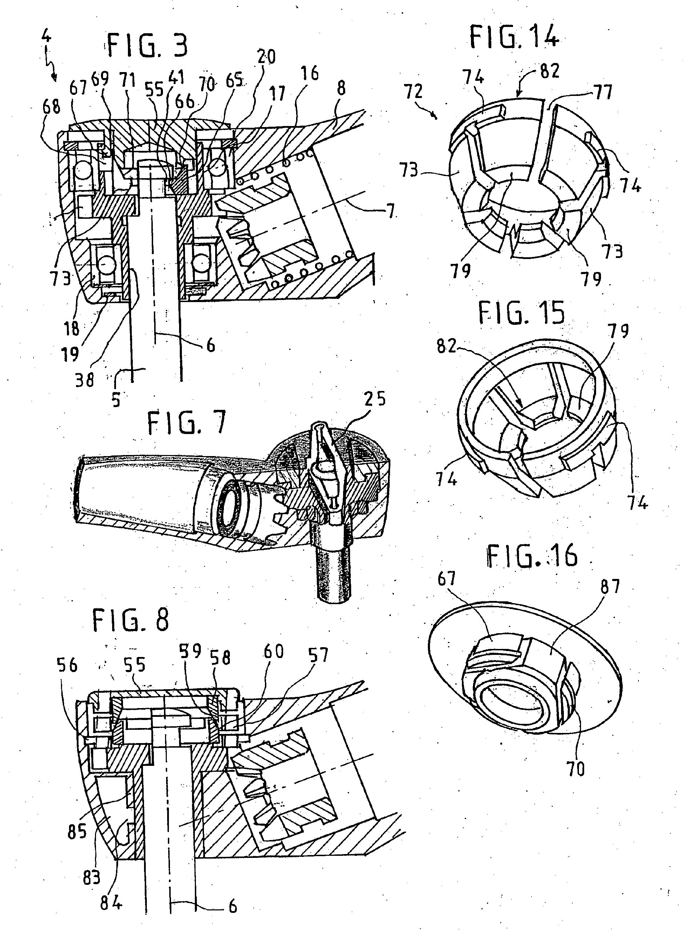

Une pièce à main selon l'invention connectée et accouplée à un moteur peut ainsi générer par exemple, une rotation à un instrument (5) (instrument à canaux par exemple) et véhiculer par-là même, un courant électrique exploitable pour la détection de l'apex. La connection électrique entre moteur et pièce à main (voir figures 2 et 3) peut se faire par tout moyen de connexion par exemple entre un doigt d'accrochage du moteur et une gorge d'accrochage (10) d'une douille (11) (ou par poussoir télescopique par exemple). L'enveloppe (8), isolante, est maintenue par le praticien, et son extrémité côté tête (4) a pour environnement la bouche du patient. Dans cette configuration la chaîne d'organes de transmission mécaniques et électriques est constituée comme suit dans le manche : le courant électrique passe de la douille (11) à une bague extérieure fixe d'un premier roulement (12), et à un premier ressort (13), puis à une bague extérieure fixe d'un deuxième roulement (14), puis à une bague (15) arrêtée axialement par un premier épaulement dans l'enveloppe (8), puis à un ressort (16) arrêté axialement par un deuxième épaulement de l'enveloppe (8).

Les premier et deuxième roulements (12, 14) portent un arbre de transmission selon l'axe longitudinal (7) du manche, ou premier axe de la pièce à main (1), et les ressorts (13 et 16) sont des ressorts à compression dont les spires sont disposées extérieurement à l'arbre de transmission (7).

A ce stade le courant électrique a ainsi traversé la partie manche du contre-angle ou de la pièce à main (1).

En variante mais non selon l'invention, on pourrait imaginer un fil conducteur partant de l'extrémité côté moteur, jusqu'au contact avec l'instrument ou outil (5)

La tête (4) du contre-angle, avec son deuxième axe ou axe d'entraînement (6), supporte deux roulements à billes (à contact oblique si possible) à savoir un roulement supérieur (17) dont la bague extérieure coopère avec le deuxième ressort (16) du manche et un roulement inférieur (18) dont le jeu axial est rattrapé à l'aide d'une rondelle élastique (19).

Par ce type de montage de roulements, les billes des roulements sont toujours en contact avec les bagues extérieures et intérieures de ceux-ci assurant ainsi la liaison électrique entre parties fixes et parties mobiles.

Un pignon fût (20) monté sur l'axe d'entraînement (6) comporte des dents (21) s'égrenant avec les dents (22) d'un pignon de sortie (23) du manche.

Le pignon fût (20) est conducteur et solidaire des bagues intérieures des roulements, il assure la conduite électrique à l'instrument (5) et l'entraînement mécanique de celui-ci. Le courant électrique véhiculé jusqu'à l'extrémité de l'instrument délimitera l'apex par un effet de variation de résistance, compte-tenu de l'isolation extérieure de l'enveloppe (8) et d'un bouton-poussoir (55) prévu sur la tête (4) et qui sera décrit plus loin.

En variante mais non selon l'invention, la liaison électrique entre le deuxième roulement (14) et la tête (40) de l'instrument est assurée par un organe de liaison élastique (88) et électriquement conducteur, l'entraînement mécanique de l'instrument étant comme précédemment assuré par le pignon-fût (20).

Ledit organe de liaison (88) est par exemple une lamelle, ou une tige de section circulaire ou rectangulaire et comporte un premier segment périphérique (89) engagé dans une rainure (90) pratiquée dans la bague (15) du roulement (14) et un deuxième segment périphérique (91), sur l'extrémité opposée au premier segment, qui est en appui sur la tête de l'instrument (40), ledit organe de liaison étant maintenu perpendiculaire à l'axe de l'instrument quand le bouton poussoir est inactivé, grâce à la rainure (90).

Cette variante est particulièrement avantageuse car d'une part un appui sur le bouton-poussoir (55) tend à repousser la tête de l'instrument (40), et car d'autre part le contact de l'organe de liaison sur la tête (40) est centré sur l'axe de l'instrument grâce à la surface sphérique de ladite tête, d'où une vitesse de frottement voisine de zéro.

### Concept du dispositif de fixation et du moyen de serrage desserrage de l'instrument dans la tête.

On décrit à présent des modes de réalisation préférés mais non limitatif d'un dispositif de fixation d'un instrument dans la tête (4) et de leurs dispositifs de serrage et desserrage de l'instrument.

Lors d'un traitement canalaire par exemple, l'accessibilité des molaires est un gage de confort et de qualité pour le praticien et le patient. C'est pourquoi la demanderesse s'est fixé pour objectif de proposer un ensemble porte outil (24) composé des organes de transmission mécanique de la tête, qui soit le plus réduit et le plus compact possible.

Elle a atteint son objectif en concevant :
- un nouveau moyen de serrage-desserrage (25) compact et peu encombrant, faisant partie d'un ensemble de fixation, et consistant en une ceinture déformable (25) et élastique en matériau plastique (PEEK par exemple) ou non, assurant à elle seule les fonctions de serrage et de desserrage, le desserrage étant réalisé par une action manuelle centripète sur la ceinture et le serrage étant réalisé par un relâchement de cette action,
- un logement intérieur (26) dans la tête, apte à recevoir l'ensemble porte outil (24) et son moyen de serrage desserrage (25), ledit logement débouchant sur la tête par une ouverture (27) obturable par un bouchon ou un chapeau (28), ou par un bouton-poussoir.

On comprendra mieux cette solution à la lecture des deux exemples de réalisation décrits ci-après.

On décrit d'abord un premier mode de réalisation en liaison avec les figures 4 à 7 et pour lequel le desserrage est commandé par une action manuelle directe sur la ceinture.

Selon le logement (26) de l'ensemble porte-outil (24), présente d'une part une partie basse (29) cylindrique coaxiale avec l'axe d'entraînement (6) et dont le diamètre est apte à recevoir le fût (30) du pignon-fût (20), et d'autre part une partie haute (31) sensiblement cylindrique, également coaxiale avec l'axe d'entraînement (6), et de diamètre plus large et prévu pour recevoir la denture (21) du pignon-fut avec son moyen d'enclenchement de l'instrument ainsi que le dispositif de serrage-desserrage de celui-ci décrit plus loin.

L'ouverture (27) débouchante de la partie haute du logement (31) est obturée par un bouchon ou chapeau (28), de préférence mais non obligatoirement en même matériau que l'enveloppe (8).

La partie-haute du logement (31) comporte également une ouverture latérale (32) débouchant dans un logement interne (33) du manche (3) de façon à permettre l'engrènement de la denture du pignon-fut (20) avec la denture du pignon de sortie (23) du manche (3).

Le pignon-fut tourne librement dans la tête et sa tenue axiale est assurée entre d'une part le fond (34) de la partie supérieure du logement qui forme un épaulement, et d'autre part la face frontale (35) du bouchon. La liberté axiale résultante dudit pignon-fût est de quelques centièmes de mm.

Le mouvement de rotation du pignon de sortie (23) est transmis au pignon-fût (20) puis à l'instrument (5) grâce à un méplat (36) prévu sur l'instrument et coopérant avec un méplat (37) prévu dans l'alésage interne (38) du pignon-fût.

Selon cet exemple des figures 4 à 7 le moyen de serrage-desserrage est essentiellement composé d'une ceinture (25) en matériau déformable et élastique présentant une forme sensiblement de losange avec une zone centrale (39) prévue pour enserrer la tête (40) de l'instrument au niveau d'une rainure (41) de blocage annulaire prévue en extrémité supérieure de l'instrument.

La grande diagonale du losange est prévue pour que ses deux extrémités dépassent diamétralement de l'enveloppe de la tête (4) par deux saillies (42) placées chacune dans une encoche (43) de la tête, chaque encoche (43) débouchant d'une part dans la partie haute (31) du logement, d'autre part dans l'ouverture (27) recevant le bouchon.

Une action manuelle centripète directe, sur les deux saillies (42) simultanément, réalise le desserrage de l'instrument et le relâchement de cette action assure le serrage dudit instrument.

Les flans (44) des encoches assurent le blocage en rotation de la ceinture, qui est centrée dans la tête au moyen de décrochements (45) prévus à proximité des saillies (42) et s'appuyant sur la périphérie (46) de la partie supérieure du logement (26).

La tenue axiale de la ceinture est assurée d'une part par un épaulement (47) prévu dans le fond (48) d'une cavité axiale (49) du bouchon destinée à accueillir la tête de l'instrument (40) et d'autre part par le fond (50) des encoches.

De cette façon la ceinture ne touche pas la partie tournante du pignon-fût.

A l'état libre, ladite ceinture coopère avec un épaulement supérieur (51) de la rainure annulaire de la tête de l'instrument pour réaliser une première limitation axiale dudit instrument, l'autre limitation axiale étant assurée par un méplat (52) du pignon-fût coopérant avec l'extrémité (53) transversale du méplat de l'instrument.

Le déverrouillage de l'instrument consiste à exercer deux appuis diamétralement opposés sur les saillies (42), dirigés vers l'axe de rotation. Ces deux forces provoquent une composante orthogonale libérant ainsi l'instrument. Le fait d'appuyer simultanément et directement sur les deux oreilles de la ceinture (avec le pouce et l'index par exemple) garantit le serrage en bouche, par rapport au système à bouton-poussoir pas exemple. L'accrochage de l'instrument peut se faire sans appui sur les deux oreilles de la ceinture grâce à l'aménagement d'une partie conique (64) pratiquée en sous face de la zone centrale (39) dans la ceinture, le déplacement axial de l'instrument traduisant un déplacement radial de la ceinture, par élasticité, la ceinture reprend sa forme pour assurer la fonction de serrage.

On décrit à présent un deuxième mode de réalisation du dispositif de serrage-desserrage en liaison avec les figures 8 à 10.

La ceinture élastique (25) avec une forme en losange et une zone centrale (39) pour enserrer l'instrument, se différencie de la précédente par ses oreilles (54) formant des saillies perpendiculaires au plan de la ceinture et située d'un même côté de celui-ci, et par le fait qu'elle est maintenue axialement et radialement par le pignon-fût comme le montre les figures 8 à 9.

A cet effet:
- les deux extrémités de la ceinture traversent deux lumières périphériques (61) prévues sur la collerette (62) supérieure du pignon-fût, diamétralement opposées, et disposées selon un plan transversal à l'axe d'entraînement (6),
- les deux oreilles (54) sont bloquées en rotation par deux encoches (63) de ladite collerette.

Par ailleurs, la tête se distingue de la précédente en ce que le bouchon est remplacé par un bouton-poussoir (55) avec insert métallique par exemple (pour faciliter de fabrication).

Selon ce mode de réalisation, le bouton-poussoir, en PEEK par exemple, présente plusieurs parties :
- un anneau élastique (56) en extrémité basse, que limite la liberté axiale du pignon-fût et retient le bouton-poussoir sur la tête (4),
- une zone élastique (57) intermédiaire qui joue le rôle de ressort de rappel du bouton-poussoir,
- un insert (58) intérieur cylindrique qui permet, lors de l'appui sur le bouton-poussoir, de commander la déformation de la ceinture élastique, libérant ainsi l'outil, à cet effet un appui sur le bouton-poussoir (55) comprime son ressort (57) et fait coopérer la forme conique intérieure (59) de l'insert (58) avec les flans coniques complémentaires (60) des oreilles de la ceinture. La composante radiale résultante sur les oreilles (54) de la ceinture induit une autre déformation radiale perpendiculaire à cette composante primaire. Cette déformation permet le déverrouillage de l'instrument.

L'introduction de l'instrument dans la tête peut se faire avec appui sur le bouton-poussoir, ou sans appui sur le bouton-poussoir, dans ce cas un aménagement conique (64) en sous face de la zone centrale (39) de la ceinture permet l'introduction de l'instrument.

La configuration de la ceinture contribue à garantir le serrage par effet centrifuge lors de la rotation.

### Concept de boutons poussoir

La miniaturisation est une recherche constante dans le domaine de l'appareillage médical tel que, par exemple, les têtes de contre-angles en dentisterie. De nouveaux matériaux, tels que les matériaux polymères thermoplastiques ou thermodurcissables répondent à cette attente. Les mécanismes connus peuvent être reconsidérés en tenant compte des caractéristiques mécaniques, physiques et chimiques de ces nouveaux matériaux et ce, en réduisant le nombre de composants, en améliorant la qualité, et en baissant le coût de l'ensemble ; ces pièces plastiques peuvent être usinées ou injectées. Evidemment, ces matériaux plastiques, en plus de la miniaturisation, apportent donc légèreté, aptitude au glissement, pour l'appareillage dynamique, de bonnes tenues à la stérilisation ou à la désinfection, de bonnes caractéristiques élastiques. C'est pourquoi ces matériaux plastiques peuvent être employés dans la réalisation de pièces à mains dentaires. La commande du serrage ou du desserrage de l'outil s'effectue généralement par une action manuelle sur le bouton poussoir de la tête de la pièce à main. Suivant la conception, ce bouton poussoir peut être solidaire de l'ensemble dynamique (tournant, vibrant...) pour l'endodontie par exemple, et à bouton poussoir fixe, indépendant de l'ensemble dynamique.

A titre d'exemple d'application on a déjà présenté plus haut une tête de pièce à main portant une queue de fraise en référence aux figures 2 et 3.

On rappelle ici que : un corps de tête (4) monobloc ou pas avec le manche (3), reçoit un pignon-fût tournant (20) animé en rotation par un pignon de sortie (23) du manche. Le pignon-fût a donc une liberté en rotation et une liaison axiale assurée par exemple, par des roulements à billes.

Des solutions sans roulement à billes comme sur les figures 5 et 7 peuvent bien sûr être envisagées, avec des paliers lisses rapportés, ou avec des paliers lisses confondus avec le corps de tête.

La transmission du mouvement de rotation de fraise est assurée par la conjugaison du méplat (36) pratiqué dans le pignon-fût (4) et du méplat (37) de l'outil. La tenue axiale de l'outil est garantie, dans un sens, par l'épaulement du méplat du pignon-fût et par l'épaulement du méplat complémentaire de l'outil.

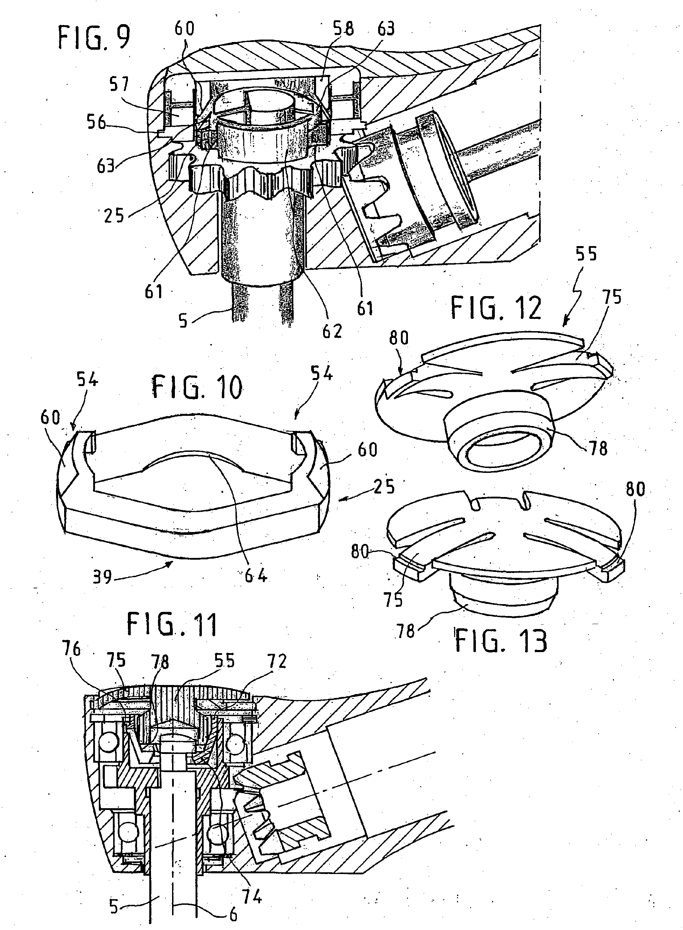

A partir de cette description commune, on peut distinguer deux types de bouton à poussoir selon l'invention à savoir:
- un bouton poussoir solidaire de l'ensemble dynamique appelé porte-outil comme celui référencé (55) en figures 3 et 16, solution caractérisée par un contact permanent entre l'ensemble de verrouillage tournant et le bouton poussoir. A l'état repos, le bouton poussoir (55) (en PEEK par exemple) assure une limitation axiale d'un anneau fendu élastique (65) (en PEEK par exemple) et par la même, centre celui-ci par rapport à l'axe (6). L'anneau (65) est extérieurement cylindrique et sa paroi interne comporte une collerette supérieure à pente conique (71), une partie intermédiaire en forme d'épaulement (66) transversal dirigé vers l'axe (6). L'épaulement (66) de l'anneau élastique (65) retient, en direction axiale, l'instrument (5) en s'engageant dans la gorge annulaire (41). Le bouton poussoir (55) est guidé radialement dans l'alésage (38) du pignon-fût par un ou plusieurs secteurs ou organes (87) disposés en sous face du poussoir (55) et terminés chacun par une extrémité conique servant à réaliser le ou les appuis sur l'anneau élastique (65). Le déplacement axial du bouton-poussoir (55) est limité entre les extrémités hautes et basses de une ou plusieurs lumières (68) pratiquées dans le corps supérieur du pignon-fût et dans lesquelles coopèrent un ou plusieurs crochets (67) prévus en sous face du bouton-poussoir. L'anneau élastique (65) exerce une composante axiale sur le bouton poussoir (55) rappelant celui-ci à sa position initiale. De part leur élasticité radiale, due à des fentes (69), prévues entre les crochets et les secteurs (87) les crochets (67) permettent le « clipsage » du bouton-poussoir dans le fût. Un appui sur le bouton-poussoir (55) permet le déverrouillage de l'outil (5) par l'intermédiaire des parties coniques (70) s'engageant dans la pente conique complémentaire (71) de l'anneau élastique pour désengager l'épaulement (66). L'introduction de l'instrument (5) dans le pignon-fût peut se faire automatiquement sans l'appui sur le bouton-poussoir grâce à la partie conique (73) prévue en sous face de l'anneau élastique en extrémité de l'épaulement (66). Sur la figure 3, le moyen de serrage-desserrage est un anneau élastique fendu et ouvert selon un plan radial visible sur le plan de coupe de la figure 3 et les moyens pour exercer les forces de desserrage sont constitués par la pente conique (71).
- un bouton poussoir indépendant de l'ensemble dynamique
   En position outil maintenu, la solution est caractérisée par une désolidarisation du bouton-poussoir et du moyen de verrouillage. Une réalisation de ce type est montrée à titré d'exemple sur les figures 11 à 15.
   A l'état repos, en régime dynamique ou pas, et sans action sur le bouton-poussoir, une griffe annulaire élastique conique (72), grâce à ses bras (73) (par exemple 6 bras) terminés chacun par un épaulement (79) dirigé vers l'axe (6), retient axialement l'outil (5). La griffe (72) est solidaire du pignon-fût tournant par l'engagement des saillies périphériques (74) de la griffe dans des ouvertures correspondantes (76) pratiquées dans le pignon-fût. Une fente (77) traversant totalement les griffes permet le montage et le démontage de la griffe dans l'alésage du pignon-fût, en lui conférant l'élasticité radiale nécessaire.
   Le bouton-poussoir (55) est retenu axialement et centré par des lames élastiques (75) découpées dans son chapeau dans l'ouverture (27) de tête ; ces lames montées sous tension dans le corps de tête offrent une liberté axiale élastique (selon l'axe 6) du bouton poussoir. Les figures 12 et 13 représentent ces lames (75) en position de contrainte et montrent lés rainures de clipsage (80) en bout de lames pour clipser le poussoir (55) dans l'ouverture (27). Une poussée axiale manuelle, sur le bouton poussoir se traduit par un déplacement axial de la base conique (78) du bouton poussoir, coopérant alors avec le cône complémentaire (82) de la cavité conique interne des bras de la griffe ; le desserrage de l'outil est alors assuré par l'écartement desdits bras et le désengagement des épaulements (79). L'appui manuel supprimé, le bouton poussoir reprend sa position initiale, les cônes respectifs des deux pièces (55) et (72) n'étant plus en contact.
   Selon cette solution des figures 11 à 15, le moyen de serrage-desserrage est la griffe conique élastique (72) dont les épaulements (79) sont aptes à s'engager dans la rainure ou gorge annulaire (28) de l'instrument, et le moyen pour exercer les forces de desserrage et constitué par la forme intérieure conique (82) de ladite griffe (72) dont la déformation radiale est garantie par la fente (77).

### Concept de graissage

On se rapporte à présent à la figure 8 qui est une coupe axiale de la figure 9 et qui montre que la tête comporte une cavité (83) prévue autour ou à côté du fût du pignon-fût pour contenir une graisse solide qui est relâchée à chaque utilisation en faible quantité par un orifice (84) de la paroi (85) de séparation entre la cavité et le fût afin de lubrifier le fût.

### Concept de montage

L'enveloppe (8) peut être réalisée en une seule pièce par moulage d'un matériau plastique(par exemple du PEEK) et donc électriquement isolant ou d'un matériau fritté comportant des inclusions métalliques (par exemple du Metal Injection Moulding en abrégé M.I.M.) et conducteur ou de tout autre matériau. Cette enveloppe comporte :
- dans la tête, un premier logement (26) pour le montage d'un porte-outil et d'un instrument selon un axe d'entraînement (6) ledit logement débouchant de part et d'autre de la tête selon deux ouvertures, dont l'une au moins, l'ouverture (27) a des dimensions aptes à permettre l'introduction de tous les organes de la tête ainsi que leur assemblage, dans le manche, un deuxième logement (33) d'axe rectiligne (7) débouchant d'une part à l'extrémité distale du manche par une ouverture (81) et débouchant d'autre part, à l'extrémité proche de la tête, dans le premier logement (26) par une ouverture latérale (32) permettant la coopération entre les organes mécaniques de la tête et ceux du manche. En outre, l'ouverture (81) est dimensionnée de façon à être apte à permettre l'introduction de tous les organes du manche ainsi que leur montage à l'intérieur de celui-ci, selon un axe rectiligne appelé axe du manche (7). Pour réaliser un contre-angle, on prévoit une enveloppe dont les axes (6) et (9) forment, par exemple, un angle compris entre 90 et 180°, préférentiellement entre 100 et 130° et pour réaliser une pièce à main droite on peut prévoir que les axes (6) et (7) soient parallèles et en décalage de façon à conserver une ouverture (27) de la tête pour le montage des pièces internes et la mise en place d'un bouchon d'un bouton poussoir.

Ce concept est particulièrement avantageux car il permet de :
- diminuer le nombre de paliers, voire de les supprimer,
- diminuer le coût de la pièce à main,
- réduire les dimensions de la pièce à main
- faciliter le nettoyage (formes lissées),
- améliorer l'hygiène (une seule pièce donc pas d'interface).

## Revendications

1. Pièce à main dentaire (1) comportant des organes mécaniques comprenant un ensemble porte-outil pour la fixation et l'entraînement en rotation d'un instrument dentaire autour d'un axe d'entraînement (6) et une chaîne d'organes de transmission mécanique du mouvement de rotation, lesdits organes mécaniques étant montés à l'intérieur d'un corps (2) comprenant une tête (4) et un manche (3),
a) le corps (2) étant formé d'une seule pièce ou enveloppe (8) électriquement isolante dont une partie sert de manche (3) et dont l'autre partie constitue une tête 4), la tête comportant un premier logement (26) débouchant avec au moins une ouverture (27) dimensionnée pour permettre l'introduction des organes de la tête et leur assemblage à l'intérieur de celle-ci, le manche comportant un deuxième logement longitudinal (33) d'axe rectiligne (7) débouchant d'une part en extrémité du manche par une ouverture (81) et d'autre part dans le premier logement par une ouverture latérale (32), l'ouverture (81) étant dimensionnée pour permettre l'introduction des organes internes du manche et leur assemblage à l'intérieur de celui-ci,
b) dans le manche, le courant électrique étant conduit depuis une douille (11) de connexion avec un moteur par la chaîne d'organes de transmission mécanique du mouvement de rotation constituée comme suit :
- dans le manche le courant électrique passe d'une douille (11) à une bague extérieure fixe d'un premier roulement (12), et à un premier ressort (13), puis à une bague extérieure fixe d'un deuxième roulement (14), puis à une bague (15) arrêtée axialement par un premier épaulement dans l'enveloppe (8), puis à un ressort (16) arrêté axialement par un deuxième épaulement de l'enveloppe (8), les premiers et deuxièmes roulements (12, 14) portant un arbre de transmission selon l'axe longitudinal (7) du manche, ou premier axe de la pièce à main (1), et les ressorts (13 et 16) étant des ressorts à compression dont les spires sont disposées extérieurement à l'arbre de transmission (7),
- dans la tête (4) du contre-angle, avec son deuxième axe ou axe d'entraînement (6) supportant deux roulements à billes à savoir un roulement supérieur (17) dont la bague extérieure coopère avec le deuxième ressort (16) du manche et un roulement inférieur (18) dont le jeu axial est rattrapé à l'aide d'une rondelle élastique (19),
c) dans la tête (4), un pignon fût (20) monté sur l'axe d'entraînement (6) solidaire des bagues intérieures des roulements, comportant des dents (21) s'engrenant avec des dents (22) d'un pignon de sortie (23) du manche, le pignon fût étant conducteur et assurant la liaison électrique à l'instrument et l'entraînement mécanique de l'instrument.

2. Pièce à main dentaire selon la revendication 1, **caractérisée en ce que** l'axe (6) de la tête et l'axe (7) du manche forment entre eux un angle prédéterminé α pour la réalisation d'un contre-angle.

3. Pièce à main dentaire selon la revendication 2, **caractérisée en ce que** α est compris entre 100 et 130°.

4. Pièce à main dentaire selon la revendication 1, **caractérisée en ce que** l'axe (6) de la tête et l'axe (7) du manche sont parallèles et décalés pour la réalisation d'une pièce à main droite.

5. Pièce à main dentaire selon l'une des revendications 1 à 4 **caractérisée en ce que** l'enveloppe (8) est réalisée par moulage.

6. Pièce à main dentaire selon la revendication 5, **caractérisée en ce que** l'enveloppe (8) est réalisée en matériau polymère.

7. Pièce à main dentaire selon la revendication 6, **caractérisée en ce que** l'enveloppe (8) est réalisée préférentiellement en PEEK.

8. Pièce à main selon l'une des revendications 1 à 7 **caractérisée en ce que** le logement intérieur (26) de la tête est apte à recevoir un ensemble porte-outil composé des organes de transmission mécaniques de la tête, et à recevoir un moyen de serrage desserrage (25) de l'outil ou instrument (5), ledit logement débouchant sur la tête par une ouverture (27) obturable par un bouchon ou un chapeau (28), ou par un bouton-poussoir.

9. Pièce à main dentaire selon l'une des revendications 1 à 8 **caractérisée en ce que** la tête contient une turbine et le corps de la pièce à main comporte des canaux de fluide nécessaires au fonctionnement.

10. Pièce à main dentaire selon l'une des revendications 1 à 9 **caractérisée en ce que** la tête présente une cavité pour contenir une graisse solide relâchée à chaque utilisation par un orifice de la paroi de séparant la cavité et le fût afin de lubrifier le fût.

11. Pièce à main dentaire selon l'une des revendications 1 à 10, **caractérisée en ce qu'**elle comporte un dispositif de fixation d'un instrument dentaire à un ensemble porte-outil pour la fixation et l'entraînement en rotation d'un outil ou instrument dentaire autour d'un axe d'entraînement (6), ledit ensemble porte-outil (24) étant intégré dans une tête (4) d'une pièce à main dentaire, et couplé à un ensemble de transmission de mouvement, intégré dans un manche (3) de ladite pièce à main (1), et composé principalement d'un moyen de serrage-desserrage déformable et élastique en forme de ceinture (25), dont au moins une partie présente une section apte à s'engager dans une gorge ou rainure annulaire qui eat prévue en partie supérieure de l'instrument et apte à maintenir ledit instrument par serrage, ledit moyen de serrage desserrage comportant également des moyens pour exercer des forces de desserrage venant annuler les forces de serrage afin de libérer l'instrument.

12. Pièce à main dentaire selon la revendication 11 **caractérisée en ce que** le dispositif de fixation est amovible par rapport au porte-outil (24).

13. Pièce à main dentaire selon l'une des revendications 11 à 12, **caractérisée en ce que** la ceinture (25) en matériau déformable élastique présente une forme sensiblement de parallélogramme avec une zone centrale (39) prévue pour enserrer la tête (40) de l'instrument au niveau d'une rainure, la grande diagonale du parallélogramme est prévue pour que ses deux extrémités dépassent diamétralement de l'enveloppe de la tête (4) par deux saillies (42) placées chacune dans une encoche (43) de la tête, les deux saillies constituant des moyens pour exercer manuellement et directement des forces de desserrage sur la ceinture.

14. Pièce à main dentaire selon la revendication 13, **caractérisé en ce que** la ceinture (25) comporte des décrochements (45) prévus à proximité des saillies (42) et s'appuyant sur la périphérie (46) d'un logement (26) de la tête.

15. Pièce à main dentaire selon la revendication 13, **caractérisée en ce que** la ceinture élastique (25) avec une forme en parallélogramme et une zone centrale (39) pour enserrer l'instrument, comporte deux oreilles (54) formant des saillies perpendiculaires au plan de la ceinture et située d'un même côté de celui-ci, les deux oreilles constituant des moyens pour exercer des forces de desserrage par l'intermédiaire d'un bouton-poussoir placé sur la tête de la pièce à main.

16. Pièce à main dentaire selon la revendication 15, **caractérisée en ce que** les oreilles comportent des flans coniques (60).

17. Pièce à main dentaire selon l'une des revendications 13 à 16, **caractérisée en ce que** la ceinture présente une partie conique (64) pratiquée en sous face de la zone centrale (39).

18. Pièce à main dentaire selon les revendications 11 à 17 **caractérisée en ce que** le dispositif de fixation comporte également un bouton-poussoir en plusieurs parties à savoir :
- un anneau élastique (56) en extrémité basse et retient le bouton-poussoir sur la tête (4),
- une zone élastique (57) intermédiaire qui joue le rôle de ressort de rappel du bouton-poussoir,
- un insert (58) intérieur cylindrique qui permet, lors de l'appui sur le bouton-poussoir, de commander la déformation de la ceinture élastique, libérant ainsi l'outil.

19. Pièce à main dentaire selon l'une des revendications 16 à 18 **caractérisée en ce que** l'insert (58) comporte une forme conique intérieure (59) pour coopérer avec les flans coniques (60) des oreilles de la ceinture.

20. Pièce à main dentaire selon l'une des revendications 13 à 15 **caractérisée en ce que** la ceinture élastique déformable présente la forme d'un anneau fendu (65) ou d'une griffe annulaire fendue (72) comportant un épaulement annulaire (66) (79) apte à s'engager dans une gorge annulaire (28) de l'instrument et une partie conique (71) pour coopérer avec une partie complémentaire conique d'un bouton poussoir.

21. Pièce à main dentaire selon la revendication 20 **caractérisée en ce que** l'anneau fendu comporte une partie conique (73) prévue en sous face de l'anneau fendu pour l'introduction de l'instrument.

22. Pièce à main dentaire selon la revendication 21, **caractérisée en ce que** le dispositif de fixation comporte en outre un bouton poussoir (55) guidé axialement par un ou plusieurs secteurs (87) disposés en sous face et terminés chacun par une extrémité conique (70).

23. Pièce à main dentaire selon la revendication 21, **caractérisée en ce que** le dispositif de fixation comporte en outre un bouton poussoir (55) comportant des lames élastiques (75) découpées dans son chapeau et terminées par des rainures de clipsage (80), et une base conique (78).

24. Pièce à main dentaire selon l'une quelconque des revendications 11 à 12, **caractérisée en ce que** le dispositif de fixation comporte en outre un bouton poussoir pour exercer les forces de desserrage sur le moyen de serrage-desserrage.

25. Pièce à main dentaire selon la revendication 24, **caractérisée en ce que** le bouton poussoir est solidaire du porte outil.

26. Pièce à main dentaire selon l'une des revendications 24 à 25, **caractérisée en ce que** le bouton poussoir est maintenu par clipsage dans une ouverture de la tête.

## Patentansprüche

1. Dentalhandstück (1), umfassend mechanische Organe, die eine Werkzeughalteranordnung zur Befestigung und zum Drehantrieb eines zahnärztlichen Instruments um eine Antriebsachse (6) und eine Kette von Organen zur mechanischen Übertragung der Drehbewegung umfasst, wobei die mechanischen Organe innerhalb eines Körpers (2), der einen Kopf (4) und einen Griff (3) umfasst, montiert sind, wobei
a) der Körper (2) aus einem elektrisch isolierenden Stück oder Umhüllung (8) gebildet ist, von dem ein Teil als Griff (3) dient und der andere Teil einen Kopf (4) bildet, wobei der Kopf eine erste Ausnehmung (26) umfasst, die mit mindestens einer Öffnung (27) ausmündet, die dimensioniert ist, um das Einführen der Organe des Kopfes und deren Montage im Inneren des letzteren zu ermöglichen, wobei der Griff eine zweite Ausnehmung (33) mit geradliniger Achse (7) umfasst, die einerseits am Ende des Griffs mit einer Öffnung (81) und andererseits in die erste Ausnehmung mit einer Seitenöffnung (32) ausmündet, wobei die Öffnung (81) dimensioniert ist, um das Einführen der inneren Organe des Griffs und deren Montage im Inneren des letzteren zu ermöglichen,
b) in dem Griff läuft der elektrische Strom von einer Buchse (11) zur Verbindung mit einem Motor über die Kette von Organen zur mechanischen Übertragung der Drehbewegung, die wie folgt besteht:
- in dem Griff läuft der elektrische Strom von einer Buchse (11) zu einem festen Aussenring eines ersten Lagers (12) und zu einer ersten Feder (13), anschließend zu einem festen Aussenring eines zweiten Lagers (14), danach zu einem Ring (15), der axial durch einen ersten Schulter in der Umhüllung (8) gestoppt wird, danach zu einer Feder (16), die axial durch einen zweiten Schulter der Umhüllung (8) gestoppt wird, wobei die ersten und zweiten Lager (12, 14) eine Antriebswelle entlang der Längsachse (7) des Griffs oder der ersten Achse des Handstücks (1) tragen und die Federn (13 und 16) Druckfedern sind, deren Windungen außerhalb der Antriebswelle (7) angeordnet sind,
- in dem Kopf (4) des Winkelstücks, mit seiner zweiten Achse oder Antriebswelle (6), die zwei Kugellagern unterstützt, nämlich ein oberes Lager (17), dessen Aussenring mit der zweiten Feder (16) des Griffs zusammenwirkt, und ein unteres Lager (18), dessen axiales Spiel mittels einer elastischen Scheibe (19) ausgeglichen wird,
c) in dem Kopf (4) umfasst ein auf der Antriebswelle (6) montiertes zylinderförmiges Zahnrad (20) Zähne (21), die in den Zähnen (22) eines Ausgangszahnrads (23) des Griffs eingreifen, wobei das zylinderförmiges Zahnrad leitfähig ist und die elektrische Verbindung mit dem Instrument und den mechanischen Antrieb des Instruments sichert.

2. Dentalhandstück nach Anspruch 1, **dadurch gekennzeichnet, dass** die Achse (6) des Kopfes und die Achse (7) des Griffs zwischen ihnen einen vorbestimmten Winkel α zur Fertigstellung eines Winkelstücks einschließen.

3. Dentalhandstück nach Anspruch 2, **dadurch gekennzeichnet, dass** α zwischen 100 und 130° liegt.

4. Dentalhandstück nach Anspruch 1, **dadurch gekennzeichnet, dass** die Achse (6) des Kopfes und die Achse (7) des Griffs zur Fertigstellung eines rechthändigen Handstücks parallel und versetzt sind.

5. Dentalhandstück nach einem der Ansprüche 1 bis 4, **dadurch gekennzeichnet, dass** die Umhüllung (8) durch Formgießen hergestellt ist.

6. Dentalhandstück nach Anspruch 5, **dadurch gekennzeichnet, dass** die Umhüllung (8) aus Polymermaterial hergestellt ist.

7. Dentalhandstück nach Anspruch 6, **dadurch gekennzeichnet, dass** die Umhüllung (8) vorzugsweise aus PEEK hergestellt ist.

8. Dentalhandstück nach einem der Ansprüche 1 bis 7, **dadurch gekennzeichnet, dass** die innere Ausnehmung (26) des Kopfes geeignet ist, um eine Werkzeughalteranordnung aufzunehmen, die aus den mechanischen Übertragungsorganen des Kopfes besteht, und um ein Mittel zum Spannen/Lösen (25) des Werkzeugs oder Instruments (5) aufzunehmen, wobei die besagte Ausnehmung an dem Kopf mit einer mittels einem Stopfen oder einer Kappe (28) oder mittels einem Druckknopf verschließbaren Öffnung (27) ausmündet.

9. Dentalhandstück nach einem der Ansprüche 1 bis 8, **dadurch gekennzeichnet, dass** der Kopf eine Turbine enthält und der Körper des Handstücks Fluidkanäle umfasst, die für den Betrieb notwendig sind.

10. Dentalhandstück nach einem der Ansprüche 1 bis 9, **dadurch gekennzeichnet, dass** der Kopf einen Hohlraum zum Enthalten eines festen Fettes umfasst, das bei jedem Gebrauch durch eine Öffnung in der Wand, die den Hohlraum von dem Zylinder trennt, freigegeben wird um den Zylinder zu schmieren.

11. Dentalhandstück nach einem der Ansprüche 1 bis 10, **dadurch gekennzeichnet, dass** es eine Vorrichtung zur Befestigung eines zahnärztlichen Instruments an einer Werkzeughalteranordnung zum Befestigen und zum Antreiben in Drehung eines zahnärztlichen Werkzeugs oder Instruments um einer Antriebsachse (6) umfasst, wobei die besagte Werkzeughalteranordnung (24) in einem Kopf (4) eines Dentalhandstücks integriert ist und mit einer Anordnung zur Übertragung der Bewegung gekoppelt ist, die in einem Griff (3) des besagten Handstücks (1) integriert ist, und hauptsächlich aus einem als ein Band ausgetalteten verformbaren und elastischen Spann-/ Lösemittel (25) besteht, von dem zumindest ein Teil einen Querschnitt umfasst, der geeignet ist, in eine Nut oder Ringnut einzugreifen, die im oberen Teil des Instruments vorgesehen und geeignet ist, das besagte Instrument durch Spannen zu halten, wobei das besagte Spann-/ Lösemittel auch Mittel zum Ausüben von Lösekräften, die die Spannkräfte annulieren, umfasst, um das Instrument zu lösen.

12. Dentalhandstück nach Anspruch 11, **dadurch gekennzeichnet, dass** die Befestigungsvorrichtung von dem Werkzeughalter (24) abnehmbar ist.

13. Dentalhandstück nach einem der Ansprüche 11 bis 12, **dadurch gekennzeichnet, dass** das Band (25) aus elastischem verformbarem Material im wesentlichen die Form eines Parallelogramms mit einem mittleren Bereich (39), der vorgesehen ist, um den Kopf (40) des Instruments im Bereich einer Nut zu umschließen, aufweist, wobei die lange Diagonale des Parallelogramms vorgesehen ist, so dass ihre beiden Enden mit zwei Vorsprüngen (42), die jeweils in einer Einkerbung (43) des Kopfes angebracht sind, diametral über die Umhüllung des Kopfes (4) hinausragen, wobei die beiden Vorsprünge Mittel, um Lösekräfte manuell und direkt auf das Band auszuüben, bilden.

14. Dentalhandstück nach Anspruch 13, **dadurch gekennzeichnet, dass** das Band (25) Absätze (45) umfasst, die in der Nähe der Vorsprünge (42) vorgesehen sind und auf dem Umfang (46) einer Ausnehmung (26) des Kopfes ruhen.

15. Dentalhandstück nach Anspruch 13, **dadurch gekennzeichnet, dass** das elastische Band (25) mit einer Form eines Parallelogramms und einem mittleren Bereich (39) zum Umschließen des Instruments zwei Laschen (54) umfasst, die zur Ebene des Bandes senkrechte Vorsprünge bilden, die sich an der gleichen Seite dieses letzteren befinden, wobei die beiden Laschen Mittel bilden, um über einen auf dem Kopf des Handstücks angebrachten Druckknopf Lösekräfte auszuüben.

16. Dentalhandstück nach Anspruch 15, **dadurch gekennzeichnet, dass** die Laschen konische Flanken (60) umfassen.

17. Dentalhandstück nach einem der Ansprüche 13 bis 16, **dadurch gekennzeichnet, dass** das Band einen an der Unterseite des mittleren Bereichs (39 vorgesehenen kegelförmigen Teil (64) umfasst.

18. Dentalhandstück nach einem der Ansprüche 11 bis 17, **dadurch gekennzeichnet, dass** die Befestigungsvorrichtung ebenfalls einen Druckknopf aus mehreren Teilen umfasst, und zwar:
- einem elastischen Ring (56) am unteren Ende, der den Druckknopf auf dem Kopf (4) hält,
- einem elastischen Zwischenbereich (57), der als eine Rückstellfeder für einen Druckknopf wirkt,
- einem zylindrischen inneren Einsatz (58), der es erlaubt, wenn auf den Druckknopf gedrückt wird, die Verformung des elastischen Bandes zu steuern, wodurch das Werkzeug gelöst wird.

19. Dentalhandstück nach einem der Ansprüche 16 bis 18, **dadurch gekennzeichnet, dass** der Einsatz (58) eine innere kegelförmige Form (59) hat, um mit den kegelförmigen Flanken (60) der Laschen des Bandes zusammenzuwirken.

20. Dentalhandstück nach einem der Ansprüche 13 bis 15, **dadurch gekennzeichnet, dass** das verformbare elastische Band die Form eines geschlitzten Ringes (65) oder einer geschlitzten Ringkralle (72) aufweist, der/die einen ringförmigen Schulter (66) (79), der geeignet ist, in eine Ringnut (28) des Instruments einzugreifen, und einen kegelförmigen Teil (71), um mit einem kegelförmigen ergänzenden Teil eines Druckknopfes zusammenzuwirken, umfasst.

21. Dentalhandstück nach Anspruch 20, **dadurch gekennzeichnet, dass** der geschlitzte Ring einen kegelförmigen Teil (73) umfasst, der auf der Unterseite des geschlitzten Ringes vorgesehen ist, für die Einführung des Instruments.

22. Dentalhandstück nach Anspruch 21, **dadurch gekennzeichnet, dass** die Befestigungsvorrichtung außerdem einen Druckknopf (55), der axial durch einen oder mehrere an der Unterseite angeordnete (87) und jeweils mit einem kegelförmigen Ende (70) endende Sektoren geführt ist.

23. Dentalhandstück nach Anspruch 21, **dadurch gekennzeichnet, dass** die Befestigungsvorrichtung außerdem einen Druckknopf (55), der aus seiner Kappe geschnittene federnde und mit Einrastnuten (80) endenden Blättchen (75) und einen kegelförmigen Sockel (78) umfasst.

24. Dentalhandstück nach einem der Ansprüche 11 bis 13, **dadurch gekennzeichnet, dass** die Befestigungsvorrichtung außerdem einen Druckknopf, um Lösekräfte auf das Spann-/Lösemittel auszuüben, umfasst.

25. Dentalhandstück nach Anspruch 24, **dadurch gekennzeichnet, dass** der Druckknopf fest mit dem Werkzeughalter verbunden ist.

26. Dentalhandstück nach einem der Ansprüche 24 bis 25, **dadurch gekennzeichnet, dass** der Druckknopf durch Einrasten in eine Öffnung des Kopfes gehalten wird.

## Claims

1. A dental hand-piece (1) including mechanical organs comprising a tool holder assembly for fastening and driving in rotation a dental instrument about a driving axis (6) and a chain of organs for the mechanical transmission of the rotational motion, said mechanical organs being mounted within a body (2) comprising a head (4) and a handle (3),
a) the body (2) being formed of one single electrically insulating part or casing (8) one portion of which serves as a handle (3) and the other portion forms a head (4), the head including a first recess (26) ending with at least one opening (27) dimensioned so as to permit the insertion of the organs of the head and their assembling inside the latter, the handle including a second longitudinal recess (33) with a rectilinear axis (7) ending, on the one hand, at the end of the handle with an opening (81) and, on the other hand, into the first recess with a side opening (32), the opening (81) being dimensioned so as to permit the insertion of the internal organs of the handle and their assembling inside the latter,
b) in the handle, the electric current being conducted from a socket (11) for connection with a motor by the chain of organs for mechanical transmission of the rotational motion formed as follows:
- in the handle, the electrical current passes from a socket (11) to a fixed outer ring of a first bearing (12), and to a first spring (13), then to a fixed outer ring of a second bearing (14), then to a ring (15) axially stopped by a first shoulder in the casing (8), then to a spring (16) axially stopped by a second shoulder of the casing (8), the first and second bearings (12, 14) carrying a shaft for transmission along the longitudinal axis (7) of the handle, or first axis of the hand-piece (1) and the springs (13 and 16) being compression springs the spires of which are arranged externally to the transmission shaft (7),
- in the head (4) of the counter-angle, with its second axis or driving axis (6) carrying two ball bearings, namely an upper bearing (17) the outer ring of which cooperates with the second spring (16) of the handle and a lower bearing (18) the axial backlash of which is taken up by means of a springy washer (19),
c) in the head (4), a barrel-shaped pinion (20) mounted on the driving axis (6) integral with the inner rings of the bearings including teeth (21) meshing with teeth (22) of an output pinion (23) of the handle, the barrel-shaped pinion being conductive and ensuring the electrical connection to the instrument and the mechanical driving of the instrument.

2. A dental hand-piece according to claim 1, wherein the axis (6) of the head and the axis (7) of the handle form a predetermined angle α between them in order to form a counter-angle.

3. A dental hand-piece according to claim 2, wherein α ranges from 100 to 130°.

4. A dental hand-piece according to claim 1, wherein the axis (6) of the head and the axis (7) of the handle are parallel and offset for forming a right-hand hand-piece.

5. A dental hand-piece according to one of claims 1 to 4, wherein the casing (8) is made by molding.

6. A dental hand-piece according to claim 5, wherein the casing (8) is made of polymer material.

7. A dental hand-piece according to claim 6, wherein the casing (8) is preferably made of PEEK.

8. A hand-piece according to one of claims 1 to 7, wherein the inner recess (26) of the head is capable of receiving a tool holder assembly comprised of the mechanical transmission organs of the head, and of receiving a means for tightening-untightening (25) the tool or instrument (5), said recess ending on the head with an opening (27) closable by means of a plug or a cap (28) or by means of a push-button.

9. A dental hand-piece according to one of claims 1 to 8, wherein the head contains a turbine and the body of the hand-piece includes fluid channels necessary for the operation.

10. A dental hand-piece according to one of claims 1 to 9, wherein the head has a cavity aimed at containing a solid fat released at each use through an orifice in the wall separating the cavity and the barrel in order to lubricate the barrel.

11. A dental hand-piece according to one of claims 1 to 10, wherein it includes a device for fastening a dental instrument to a tool holder assembly for fastening and driving in rotation a dental tool or instrument about a driving axis (6), said tool holder assembly (24) being integrated into a head (4) of a dental hand-piece, and coupled to an assembly for transmitting the motion integrated into a handle (3) of said hand-piece (1) and comprised mainly of a deformable and elastic belt-shaped means for clamping-unclamping (25) at least one portion of which has a cross-section capable of inserting into an annular groove, which is provided for in the upper portion of the instrument and capable of holding said instrument by clamping, said clamping-unclamping means including also means for exerting unclamping forces that cancel the clamping forces, in order to release the instrument.

12. A dental hand-piece according to claim 11, wherein the fastening device is movable relative to the tool holder (24).

13. A dental hand-piece according to one of claims 11 to 12, wherein the belt (25) made of elastic deformable material has a substantially parallelogram shape with a central area (39) adapted to enclose the head (40) of the instrument at the level of a groove, the large diagonal of the parallelogram is provided so that its two ends diametrically extend beyond the casing of the head (4) with two protrusions (42) each placed in a notch (43) of the head, the two protrusions forming means for manually and directly exerting unclamping forces onto the belt.

14. A dental hand-piece according to claim 13, wherein the belt (25) includes setbacks (45) provided for in the vicinity of the protrusions (42) and resting on the periphery (46) of a recess (26) of the head.

15. A dental hand-piece according to claim 13, wherein the elastic belt (25) having a parallelogram shape and a central area (39) for enclosing the instrument includes two ears (54) forming protrusions perpendicular to the plane of the belt and located at the same side thereof, the two ears forming means for exerting unclamping forces through a push-button placed on the head of the hand-piece.

16. A dental hand-piece according to claim 15, wherein the ears have conical flanks (60).

17. A dental hand-piece according to one of claims 13 to 16, wherein the belt has a conical portion (64) provided for on the underside of the central area (39).

18. A dental hand-piece according to claims 11 to 17, wherein the fastening device also includes a push-button made of several parts, namely:
- an elastic ring (56) at the lower end and holds the push-button on the head (4),
- an elastic intermediate area (57), which acts as a return spring for the push-button,
- an cylindrical inner insert (58), which permits, when pressing the push-button, to control the deformation of the elastic belt, thus releasing the tool.

19. A dental hand-piece according to one of claims 16 to 18, wherein the insert (58) has an internal conical shape (59) for cooperating with the conical flanks (60) of the ears of the belt.

20. A dental hand-piece according to one of claims 13 to 15, wherein the deformable elastic belt has the form of a split ring (65) or of a split annular claw (72) including an annular shoulder (66) (79) capable of inserting into an annular groove (28) of the instrument and a conical portion (71) for cooperating with a complementary conical portion of a push-button.

21. A dental hand-piece according to claim 20, wherein the split ring includes a conical portion (73) provided for on the underside of the split ring for the insertion of the instrument.

22. A dental hand-piece according to claim 21, wherein the fastening device includes in addition a push-button (55) axially guided by one or several sectors (87) arranged on the underside and each terminated by a conical end (70).

23. A dental hand-piece according to claim 21, wherein the fastening device includes in addition a push button (55) including resilient blades (75) cut out of its cap and terminated by snap-in grooves (80), and a conical base (78).

24. A dental hand-piece according to any of claims 11 to 13, wherein the fastening device includes in addition a push-button for exerting the unclamping forces onto the clamping-unclamping means.

25. A dental hand-piece according to claim 24, wherein the push-button is integral with the tool holder.

26. A dental hand-piece according to one of claims 24 to 25, wherein the push-button is held by snapping-in into an opening of the head.
